# EUROPÄISCHE PATENTSCHRIFT

(11) **EP 0 643 027 B1**
(45) Veröffentlichungstag und Bekanntmachung des Hinweises auf die Patenterteilung: **29.10.1997**
(21) Anmeldenummer: 94810496.3
(22) Anmeldetag: 31.08.1994
(51) Int. Cl.: C05F 17/02

(54) **Behälter zur Aufnahme und Kompostierung von Haus- und Gartenabfall**
Container for receiving and composting household waste and garden refuse
Récipients destinés à contenir et faire du compost avec des ordures ménagères et des débris de jardin

(30) Priorität: 02.09.1993 CH 2615/93
(43) Veröffentlichungstag der Anmeldung: 15.03.1995
(73) Patentinhaber: STOECKLER BIO AGRAR AG, CH-8630 Rueti (CH)
(72) Erfinder: Stoeckler, Heinz, CH-8617 Mönchaltorf/ZH (CH)
(74) Vertreter: Legland, Brynjulv

(56) Entgegenhaltungen:
- EP-A- 0 538 511
- EP-A- 0 538 579
- DE-C- 4 117 524
- DE-U- 9 114 713
- DE-U- 9 217 621
- GB-A- 2 087 860

## Beschreibung

Die Erfindung betrifft einen Behälter zur Aufnahme und Kompostierung von Haus- und Gartenabfall gemäss dem Oberbegriff des ersten Patentanspruches.

Derartige Behälter aus Kunststoff sind bereits bekannt und werden beispielsweise in Kleingärten, auf Terrassen oder Balkone aufgestellt. Bei solchen Kompostierbehältern spielt die Wärmedämmung, unabhängig von der Verwendung einer Bakterienmasse, eine sehr wichtige Rolle, weil der Kompostiervorgang mit höheren Temperaturen beschleunigt wird.

In DE-U-9114713 (D1) ist ein nicht zerlegbarer doppelwandiger Behälter beschrieben, bei dem Luft zwischen den Wänden als Isoliermittel dient. Zwischen den beiden Wänden befindet sich ein Zwischenmantel, jedoch ist keine gegenseitige Abstützung der beiden Wände vorhanden. Die Öffnung zur Humusentnahme befindet sich unten. Ferner ist der Behälter nicht längs einer Radialebene trennbar, was die Kosten für den Transport und die Lagerung enorm erhöht.

In DE-U-9217621 (D3) ist eine weitere doppelwandige, nicht zerlegbare, relativ einfache Ausführung mit drei Entnahmeöffnungen seitlich unten beschrieben. Bei dieser Ausführung sind keine Abstützungen zwischen den beiden Wänden vorgesehen. Die Entnahmeöffnungen werden nach der Herstellung des Behälters in einem zusätzlichen Arbeitsvorgang ausgeschnitten oder ausgefräst, was nicht nur die Herstellungskosten stark erhöht sondern auch die Festigkeit des Behälters abschwächt. Zum Schliessen der Entnahmeöffnungen wird ein Rohrstück übergestülpt, das alle Öffnungen abdichtet. Der Behälter hat aber keine geschlossene Luftkammer, weil die Herstellung der Entnahmeöffnungen dies verhindert.

Die in EP-A-0 538 579 (D2) beschriebene Ausführung ist nicht doppelwandig ausgeführt und besteht aus mehreren aufeinander gestapelten Kegelstumpfen, so dass der Behälter in horizontalen Ebenen unterteilt ist. Unten ist seitlich ein Auslass für den Humus vorgesehen. Die Belüftung des zu kompostierenden Materials ist stark ausgebaut. Es handelt sich hier um eine Ausführung, die in vertikaler Richtung nicht zerlegbar ist.

Andere Ausführungen haben einen ungünstigen Preis, ein hohes Gewicht, ein wenig ansprechendes Aussehen oder sind unpraktisch in der Handhabung bzw. beim Transport. Es ist dabei wichtig, dass der Behälter aus wenigen Teilen vom Käufer zusammengesetzt werden kann.

Die meisten im Handel erhältlichen Ausführungen benötigen wegen der niedrigen Innentemperatur, zur Herstellung des Komposts zu viel Zeit, was sich nachteilig auf den Nährwert des fertigen Komposts auswirkt.

Die langsame Herstellung des Komposts wird ferner mindestens teilweise dadurch verursacht, dass die Frischluftzufuhr zum Behälter von unten behindert ist. Andererseits gibt es Ausführungen, die das Eindringen von Mäusen ermöglichen.

Aufgabe der Erfindung ist somit die Schaffung eines Behälters der obengenannten Art, welcher die Nachteile der bestehenden Ausführungen nicht aufweist.

Der zu schaffende Behälter soll gegenüber den bisherigen Ausführungen u.a. die folgenden Vorteile aufweisen:
- er soll leicht und handlich sein, und aus Teilen bestehen, die der Käufer ohne Werkzeuge zusammenstellen kann,
- er soll preisgünstig und hinsichtlich Torsion stabil sein,
- er soll eine gute Isolation aufweisen, die eine relativ hohe Innentemperatur gewährleistet,
- er soll eine Form aufweisen, die das Entleeren begünstigt.
- er soll mit einem verschliessbaren Deckel ausgestattet sein.

Diese Aufgabe ist erfindungsgemäss durch die Merkmale im Kennzeichnungsteil des ersten Patentanspruches gelöst.

Ausführungsformen sind in den abhängigen Ansprüchen umschrieben.

Der neu geschaffene Behälter oder Thermokomposter ist gegenüber bestehenden Ausführungen einfach, stabil und preisgünstig, hat eine hohe Innentemperatur, was den Kompostiervorgang beschleunigt und einen höheren Nährwert des Komposts erbringt. Dies ist zur Hauptsache in der Art der verwendeten Isolation begünstigt, die aus in Kammern eingeschlossener Luft besteht. Diese Kammern erstrecken sich dabei über die gesamte Wandung des Behälters.

Die äussere Form des Kompostierbehälters ist ansprechend und praktisch und erleichtert das Entleeren. Zu diesem Zweck wird der gesamte Oberteil abgehoben, wonach der Kompost als pyramidenstumpfförmiger Körper zurückbleibt. Der Boden kann, sofern vorhanden, unter den Kompost weggezogen werden.

Nachfolgend wird eine Ausführungsform des erfindungsgemässen Behälters anhand der Zeichnung näher erläutert. Es zeigen:
- Fig. 1: eine schaubildliche Darstellung des Behälters,
- Fig. 2: wie Fig. 1, jedoch in grösserem Massstab und mit sichtbarem Kompostkörper, und
- Fig. 3: einen schematischen Vertikalschnitt durch einen Teil des Oberteils des Behälters.

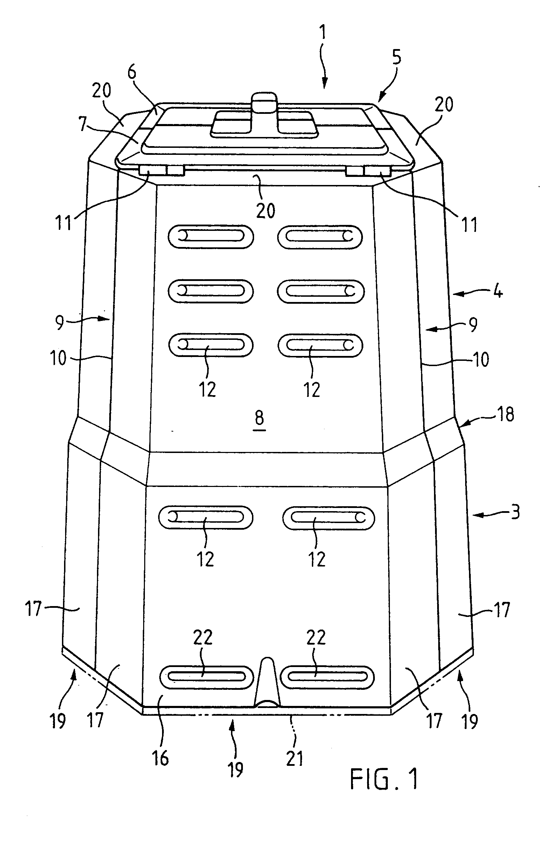

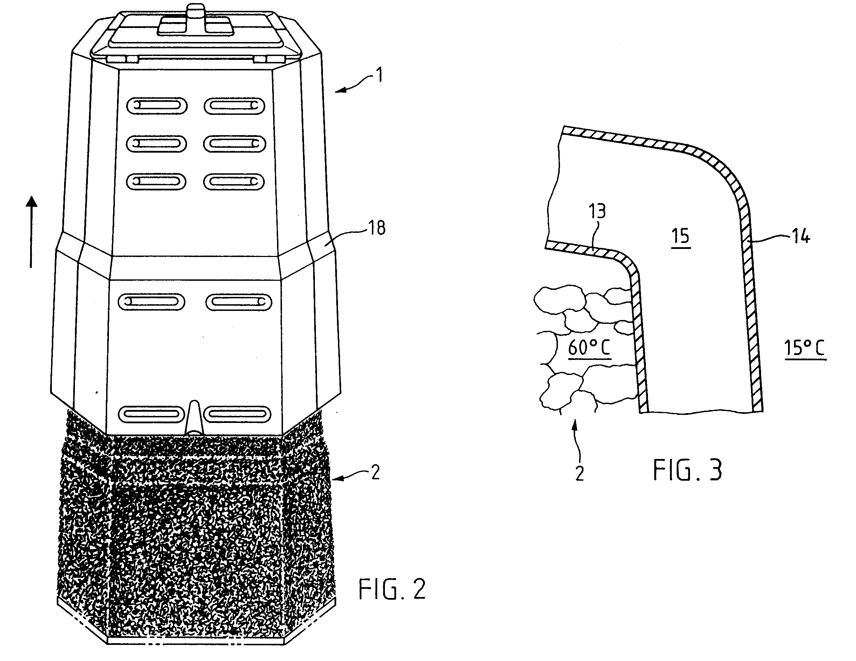

In Fig. 1 und 2 ist ein Behälter 1 und ein Kompostkörper 2 gezeigt, der dann sichtbar wird, wenn der Behälter 1 von einer Bodenplatte 21, nach der Art einer Kuchenform nach oben gezogen wird. Der Behälter 1 verjüngt sich von unten nach oben, um das Abziehen zu erleichtern.

Der Behälter 1 besteht aus zwei Pyramidenstümpfen 3 und 4, von welchen der obere 4 durch einen Deckel 5 abgeschlossen ist, der in der Mitte eine Öffnung aufweist, die durch zwei Lukendeckel 6 und 7 geschlossen ist und zum Einfüllen von Garten- und Küchenabfall dient.

Der Behälter 2 ist aus vier Wandelementen 19 zusammengesetzt, die etwa ähnlich ausgeführt sind und an den Verbindugsfugen 10 der Seitenflächen 9 zusammenkommen. Die Lukendeckel 6 und 7 sind in Scharnieren 11 im Deckelelement 20 drehbar angeordnet. Die vier Seitenflächen 8, die keine Verbindungsfugen 10 aufweisen, sind in der Aussenfläche mit Einbuchtungen 12 versehen, die als Abstandhalter zur Innenwandung dienen.

Alle vier Wandelemente 19 und das Deckelelement 20 sind doppelwandig ausgeführt und durch ein Blasverfahren hergestellt. In der Weise ist es möglich, die Wandstärke auf ein Mindestmass zu beschränken, was zum geringen Gewicht des Behälters 1 führt. Jedes Wandelement 19 umfasst ein Hauptelement 16, zwei Trennelemente 17 und ein Deckelelement 20. Die Trennelemente 17 von benachbarten Wandelementen 19 kommen bei der Zusammensetzung des Behälters 1 längs der Verbindungsfuge 10 zusammen.

Als Isolation für die im Inneren vorhandene Wärme ist der Raum zwischen der Innen- 13 und der Aussenwand 14 mit Luft 15 (Fig. 3) gefüllt. Dabei haben Versuche ergeben, dass Luft als Isolationsmittel besonders gut geeignet ist. Im Vergleich zur bisherigen Styropor-Isolation hat Luft ein markant besseres Isolationsvermögen, bzw. einen deutlich günstigeren K-wert.

Durch Versuche wurde festgestellt, dass eine Innentemperatur von 60°C bei einer Aussentemperatur von 15°C gehalten werden konnte. Dabei ist zu erwähnen, dass eine Innentemperatur von 60°C von der Art des zu kompostierenden Gutes abhängig ist. Es wird dabei darauf hingewiesen, dass zur Erzielung einer optimalen Innentemperatur, eine passende Mischung aus Garten- und Küchenabfall erforderlich ist.

Zwischen dem oberen 4 und dem unteren Pyramidenstumpf 3 befindet sich - zur Erleichterung des Abziehens des Behälters 1 vom Kompostkörper 2 - ein Pyramidenstumpf 18 mit erhöhter Verjüngung.

Das Deckelelement 20 ist von den Wandelementen 19 getrennt und greift in diese ein oder umfasst sie formschlüssig.

Unter dem Behälter 1 kann eine Bodenplatte 21 mit einem Gitter vorgesehen werden, das die Zufuhr von Frischluft ermöglicht, jedoch das Eindringen von Ratten und Mäusen verhindert.

Zur Beschleunigung der Kompostierung kann dem Behälter eine Bakterienmasse zugeführt werden. Diese Masse kann in einem Gefäss enthalten sein, das am Behälter in einer Klammer gehalten wird.

Der Behälter ist im Laden als Bausatz erhältlich, der vom Käufer zu Hause zusammengestellt wird. Der so als Bausatz lieferbare Behälter führt zu immensen Einsparungen an Transportkosten, wobei die Bausätze für eine grössere Anzahl von Behältern auf einer Palette transportiert werden können.

Der Behälter ist in zwei Ausführungen vorgesehen, die etwa Tischhöhe oder etwas darüber aufweisen, wobei der grössere Behälter für eine Kapazität von etwa 400 Liter und der kleinere für etwa 150 Liter ausgelegt ist.

## Patentansprüche

1. Doppelwandiger, sich von unten nach oben verjüngender Behälter zur Aufnahme und Kompostierung von Haus- und Gartenabfall, mit Wänden, die gegeneinander abgestützt sind, mit einem Deckelelement (20) mit einer abschliessbaren Einfüllöffnung und einem Boden (21), dadurch gekennzeichnet, dass der Behälter (1) die Form von aufeinander gestellten, zu einer Einheit verbundenen Pyramidenstümpfen (3,4) aufweist, die aus mindestens vier Wandelementen (19) besteht, die bei der Zusammensetzung des Behälters längs der Verbindungsfuge (10) zusammenkommen, dass die beiden Wände der Wandelemente von unten bis oben an voneinander beabstandeten Stellen durch Abstandhalter gegeneinander abgestützt sind, und dass sich zwischen den Doppelwänden geschlossene Luftkammern (15) befinden, wobei die Luft als Isoliermedium dient, und dass die Einfüllöffnung durch Lukendeckel (6,7) abschliessbar ist.

2. Behälter nach Anspruch 1, dadurch gekennzeichnet, dass jedes Wandelement (19) aus einem Hauptelement (16) und zwei Trennelementen (17) zusammengesetzt ist, und dass jeweils zwei Trennelemente (17) von benachbarten Wandelementen (19) an Verbindungsfugen (10) zusammenstossen.

3. Behälter nach Anspruch 1 oder 2, dadurch gekennzeichnet, dass die einzelnen Wandelemente (19) durch ein Blasverfahren hergestellt sind.

4. Behälter nach einem der Ansprüche 1 bis 3, dadurch gekennzeichnet, dass er mehr als vier Wandelemente (19) aufweist.

5. Behälter nach Anspruch 4, dadurch gekennzeichnet, dass das Deckelelement (20) von den Wandelementen (19) getrennt ist und in diese eingreift oder sie formschlüssig umfasst.

6. Behälter nach einem der Ansprüche 1 bis 5, dadurch gekennzeichnet, dass die doppelwandigen Wandelemente (19) Einbuchtungen (12) aufweisen, die sich mindestens teilweise von der Aussenwand (14) bis zur Innenwand (13) des einzelnen Wandelementes (19) erstrecken und zu dessen Verstärkung im Blasverfahren mit der Innenwand (13) verschweisst sind.

7. Behälter nach einem der Ansprüche 1 bis 6, dadurch gekennzeichnet, dass er unten mit einem Boden versehen ist, dessen Umfangskante die einzelnen Wandelemente formschlüssig umfasst.

8. Behälter nach Anspruch 7, dadurch gekennzeichnet, dass der Boden mit einem Lufteinlass und einem Gitter gegen das Eindringen von Ratten und Mäusen versehen ist.

9. Behälter nach einem der Ansprüche 1 bis 8, dadurch gekennzeichnet, dass ein Behälter (1) komplett oder seine einzelnen Teile für beispielsweise 25 komplette Behälter zu Einheiten für den Transport auf Paletten verpackt sind.

## Claims

1. Double-wall container for composting of household and garden refuse, with side walls supported against each other and being tapered upwardly, with a cover element (20) with a closable inlet opening and a bottom (21), characterized in that the container has the shape of pyramid frustums (3,4) placed on the top of each other to form a unit consisting of at least four wall elements (19), connected to each other along connecting fugues (10), that the two walls of the double-wall elements from the bottom to the top, at places distant each other, are mutually supported, and that air chambers (15) are defined between the double walls, whereby air serves as insulating means, and that the inlet opening is lockable by means of a hatch cover (6,7).

2. Container according to claim 1, characterized in that each wall element (19) comprises a main element (19) and two separating element (17), and that two separating elements (17) from adjacent wall elements (19) are joined together in connection fugues (10).

3. Container according to claim 1 or 2, characterized in that the individual wall elements (19) are produced in a blowing method.

4. Container according to one of the claims 1 to 3, characterized in that it has more than four wall elements (19).

5. Container according to claim 4, characterized in that the cover element (20) is separated from the wall elements (19) and engage or form-close such elements (19).

6. Container according to one of the claims 1 to 5, characterizted in that the double-wall elements (19) comprises recesses (12), which at least partly extend from the outer wall (14) to the inner wall (13) of the individual wall element (19) and, for the strenghtening thereof, is heat-sealed or welded to the inner wall (13) by a blowing method.

7. Container according to one of the claims 1 to 6, characterized in that it underneath is provided with a floor, the perifery edge of which form-close the individual wall elements (19).

8. Container according to claim 7, characterized in that the floor is provided with air inlets and a grating as protection against the entry of rats and mouses.

9. Container according to one of the claims 1 to 8, characterized in that a complete unit or the individual parts thereof for, as for example 25 containers, are packed onto palletes for transportatikon.

## Revendications

1. Récipient à doubles parois, dont la section diminue de bas en haut, destiné à contenir et à faire du compost avec des ordures ménagères et des débris de jardin, avec des parois étayées les unes par rapport aux autres, avec un couvercle (20) présentant une ouverture de remplissage pouvant être fermée et un fond (21), caractérisé en ce que le récipient (1) présente la forme de troncs de pyramide (3, 4) placés l'un sur l'autre pour constituer une unité, formée au moins de quatre éléments de paroi (19) qui lors de l'assemblage du récipient se rencontrent le long du joint de liaison (10), en ce que les deux parois des éléments de paroi sont étayées les unes par rapport aux autres du bas en haut à des endroits distants par des entretoises, en ce que des chambres à air fermées (15) se trouvent entre les doubles parois, l'air faisant fonction d'élément d'isolation, et en ce que l'ouverture de remplissage peut être fermée par un couvercle à lucarne (6, 7).

2. Récipient selon la revendication 1, caractérisé en ce que chaque élément de paroi (19) est composé d'un élément principal (16) et de deux éléments de séparation (17), et que deux éléments de séparation (17) d'éléments de paroi voisins (19) se rencontrent au joint de liaison (10).

3. Récipient selon la revendication 1 ou 2, caractérisé en ce que les différents éléments de paroi (19) sont obtenus par soufflage.

4. Récipient selon la revendication 1 à 3, caractérisé en ce qu'il présente plus de quatre éléments de paroi (19).

5. Récipient selon la revendication 4, caractérisé en ce que le couvercle (20) est séparé des éléments de paroi (19) et qu'il s'engage dans ces éléments ou qu'il les épouse parfaitement.

6. Récipient selon la revendication 1 à 5, caractérisé en ce que les éléments à double paroi (19) présentent des cavités (12) qui s'étendent au moins partiellement de la paroi extérieure (14) à la paroi intérieure (13) de chaque élément de paroi (19) et qui sont à titre de renfort soudées à la paroi intérieure (13) par soufflage.

7. Récipient selon la revendication 1 à 6, caractérisé en ce qu'il est muni d'un fond à la partie inférieure, dont la bordure épouse parfaitement les différents éléments de paroi.

8. Récipient selon la revendication 7, caractérisé en ce que le fond est muni d'une entrée d'air et d'une grille destinée à prévenir la pénétration des souris et des rats.

9. Récipient selon la revendication 1 à 8, caractérisé en ce qu'un récipient (1) complet ou les différents éléments destinés par exemple à former 25 récipients complets sont emballés pour le transport au moyen de palettes.
